# EUROPEAN PATENT APPLICATION

(11) **EP 4 534 454 A2**
(43) Date of publication of application: **09.04.2025**
(21) Application number: 24220905.4
(22) Date of filing: 14.07.2021
(51) Int. Cl.: B65G 1/04, B65G 1/137, B65G 61/00, B65G 1/133, B65G 47/90, B65G 47/91

(54) **PRODUCT HANDLING SYSTEM**

(30) Priority: 28.07.2020 NO 20200861
(62) Divisional of application: 21742838.2
(71) Applicant: AutoStore Technology AS, 5578 Nedre Vats (NO)
(72) Inventor: AUSTRHEIM, Trond, 5578 Nedre Vats (NO)
(74) Representative: Kilburn & Strode LLP

(57) **Abstract**

The invention concerns a product handling system suitable for retrieving and storing products within storage containers, a storage and retrieval system using such a product handling system and a method thereof. The product handling system comprises one or more rotatable container carousels and one or more robotic picking device.

## Description

### FIELD OF THE INVENTION

The present invention relates to a product handling system, an automated storage and retrieval system using such a product handling system and a method thereof.

### BACKGROUND AND PRIOR ART

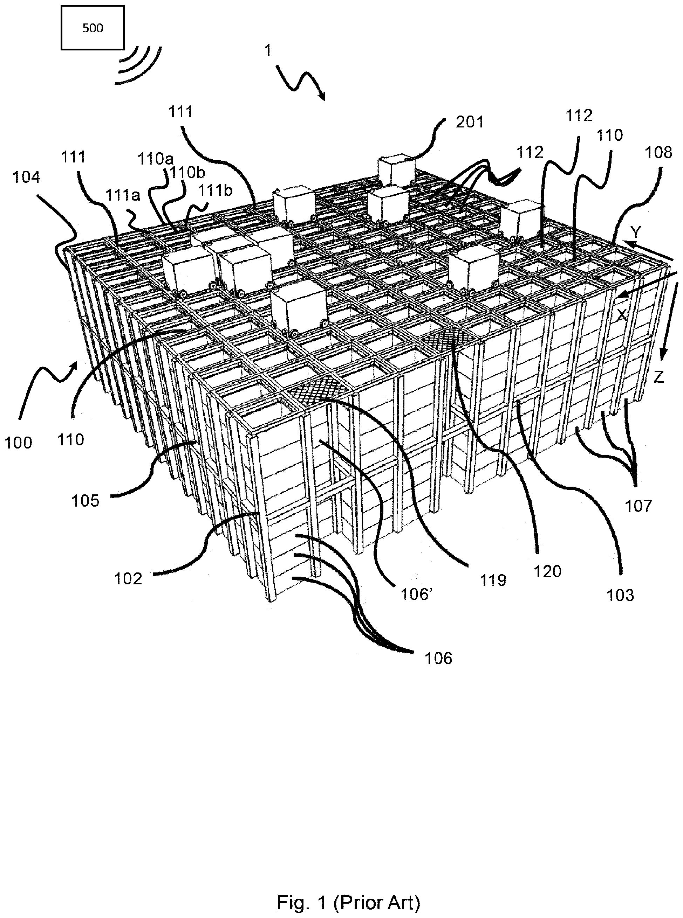

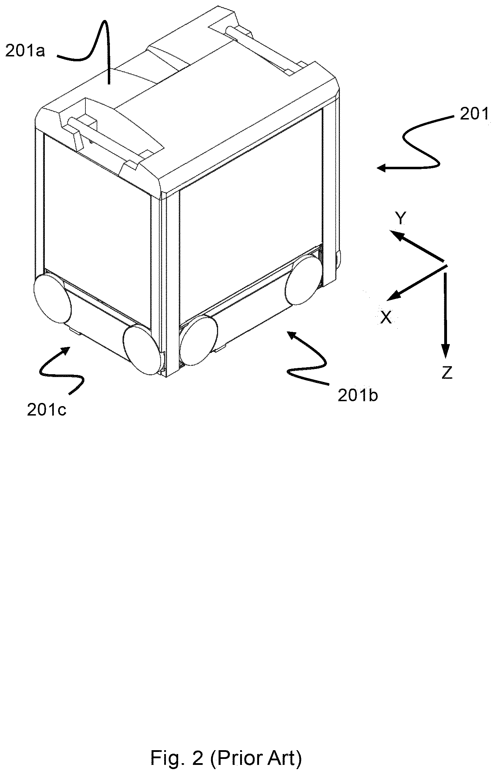

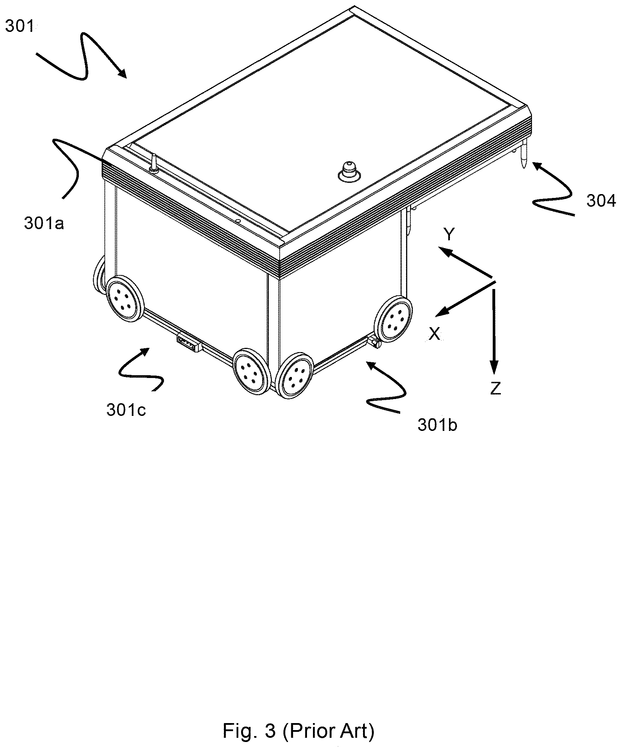

Fig. 1 discloses a typical prior art automated storage and retrieval system 1 with a framework structure 100 and Fig. 2 and 3 discloses two different prior art container handling vehicles 201,301 suitable for operating on such a system 1.

The framework structure 100 comprises upright members 102, horizontal members 103 and a storage volume comprising storage columns 105 arranged in rows between the upright members 102 and the horizontal members 103. In these storage columns 105 storage containers 106, also known as bins, are stacked one on top of one another to form stacks 107. The members 102, 103 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 201,301 are operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301 in a first direction *X* across the top of the frame structure 100, and a second set of parallel rails 111 arranged perpendicular to the first set of rails 110 to guide movement of the container handling vehicles 201,301 in a second direction *Y* which is perpendicular to the first direction *X*. Containers 106 stored in the storage columns 105 are accessed by the container handling vehicles 201,301 through grid openings 115 in the rail system 108. The container handling vehicles 201,301 can move laterally above the storage columns 105, i.e. in a plane which is parallel to the horizontal *X-Y* plane.

The upright members 102 of the framework structure 100 may be used to guide the storage containers 106 during raising of the containers out from, and lowering of the containers into, the columns 105. The stacks 107 of containers 106 are typically self-supportive.

Each prior art container handling vehicle 201,301 comprises a vehicle body 201a,301a, and first and second sets of wheels 201b,301b,201c,301c which enable the lateral movement of the container handling vehicles 201,301 in the *X* direction and in the *Y* direction, respectively. In Figs. 2 and 3 two wheels in each set are fully visible. The first set of wheels 201b,301b is arranged to engage with two adjacent rails of the first set 110 of rails, and the second set of wheels 201c,301c is arranged to engage with two adjacent rails of the second set 111 of rails. At least one of the sets of wheels 201b,301b,201c,301c can be lifted and lowered, so that the first set of wheels 201b,301b and/or the second set of wheels 201c,301c can be engaged with the respective set of rails 110, 111 at any one time.

Each prior art container handling vehicle 201,301 also comprises a lifting device 304 for vertical transportation of storage containers 106, e.g. raising a storage container 106 from, and lowering a storage container 106 into, a storage column 105. The lifting device 304 comprises one or more gripping / engaging devices (not shown) which are adapted to engage a storage container 106, and which gripping / engaging devices can be lowered from the vehicle 201,301 so that the position of the gripping / engaging devices with respect to the vehicle 201,301 can be adjusted in a third direction *Z* which is orthogonal the first direction *X* and the second direction *Y*. Parts of the lifting device 304 of the container handling vehicle 301 are shown in fig. 3. The gripping device of the container handling device 201 is located within the vehicle body 201a in Fig. 2.

Conventionally, and also for the purpose of this application, *Z*=1 identifies the uppermost layer of storage containers, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1.*..n* and *Y=*1*...n* identifies the position of each storage column 105 in the horizontal plane. Consequently, as an example, and using the Cartesian coordinate system *X, Y, Z* indicated in Fig. 1, the storage container identified as 106' in Fig. 1 can be said to occupy storage position *X*=10, *Y=2, Z=3.* The container handling vehicles 201,301 can be said to travel in layer *Z*=0, and each storage column 105 can be identified by its *X* and *Y* coordinates.

The possible storage positions within the framework structure / prior art storage grid 100 are referred to as storage cells. Each storage column 105 may be identified by a position in an *X-* and *Y*-direction, while each storage cell may be identified by a container number in the *X-, Y* and *Z*-direction.

Each prior art container handling vehicle 201,301 comprises a storage compartment or space for receiving and stowing a storage container 106 when transporting the storage container 106 across the rail system 108. The storage space may comprise a cavity arranged centrally within the vehicle body 201a as shown in Fig. 2 and as described in e.g. WO2015/193278A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The central cavity container handling vehicles 201 shown in Fig. 2 may have a footprint that covers an area with dimensions in the *X* and *Y* directions which is generally equal to the lateral extent of a storage column 105, e.g. as is described in WO2015/193278A1, the contents of which are incorporated herein by reference. The term 'lateral' used herein may mean 'horizontal'.

Alternatively, the central cavity container handling vehicles 101 may have a footprint which is larger than the lateral area defined by a storage column 105, e.g. as is disclosed in WO2014/090684A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks.

WO2018146304, the contents of which are incorporated herein by reference, illustrates a typical configuration of rail system 108 comprising rails and parallel tracks in both *X* and *Y* directions.

In the framework structure / prior art storage grid 100, a majority of the columns 105 are storage columns 105, i.e. columns 105 where storage containers 106 are stored in stacks 107. However, some columns 105 may have other purposes. In fig. 1, columns 119 and 120 are such special-purpose columns used by the container handling vehicles 201,301 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. Note that the term 'tilted' means transportation of storage containers 106 having a general transportation orientation somewhere between horizontal and vertical.

In fig. 1, the first port column 119 may for example be a dedicated drop-off port column where the container handling vehicles 201,301 can drop off storage containers 106 to be transported to an access or a transfer station, and the second port column 120 may be a dedicated pick-up port column where the container handling vehicles 201,301 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1, the contents of which are incorporated herein by reference.

When a storage container 106 stored in one of the columns 105 disclosed in Fig. 1 is to be accessed, one of the container handling vehicles 201,301 is instructed to retrieve the target storage container 106 from its position and transport it to the drop-off port column 119. This operation involves moving the container handling vehicle 201,301 to a location above the storage column 105 in which the target storage container 106 is positioned, retrieving the storage container 106 from the storage column 105 using the container handling vehicle's 201,301 lifting device 304, and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles specifically dedicated to the task of temporarily removing storage containers from a storage column 105. Once the target storage container 106 has been removed from the storage column 105, the temporarily removed storage containers can be repositioned into the original storage column 105. However, the removed storage containers may alternatively be relocated to other storage columns.

When a storage container 106 is to be stored in one of the columns 105, one of the container handling vehicles 201,301 is instructed to pick up the storage container 106 from the pick-up port column 120 and transport it to a location above the storage column 105 where it is to be stored. After any storage containers positioned at or above the target position within the storage column stack 107 have been removed, the container handling vehicle 201,301 positions the storage container 106 at the desired position. The removed storage containers may then be lowered back into the storage column 105, or relocated to other storage columns.

For monitoring and controlling the automated storage and retrieval system 1, e.g. monitoring and controlling the location of respective storage containers 106 within the framework structure 100, the content of each storage container 106; and the movement of the container handling vehicles 201,301 so that a desired storage container 106 can be delivered to the desired location at the desired time without the container handling vehicles 201,301 colliding with each other, the automated storage and retrieval system 1 comprises a control system 500 which typically is computerized and which typically comprises a database for keeping track of the storage containers 106.

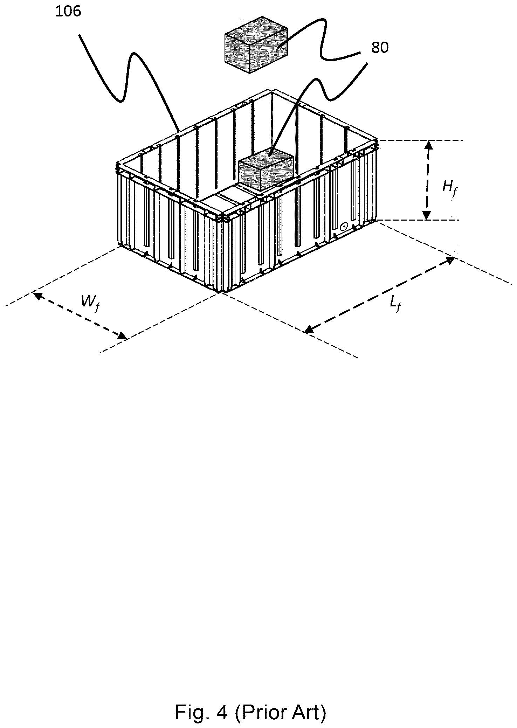

Fig. 4 shows examples of product items 80 stored in a storage container 106 having height *H_{f},* a width *W_{f}* and a length *L_{f}.*

Prior art includes WO2019/238641A1, which discloses a picking system where items are retrieved from, and replaced into, storage containers by use of a robotic operator located at an access station near the lower end of port columns. The robotic operator has a working area limited by the length of a robotic arm.

It is time consuming to transport storage containers one-by-one between storage cells and dedicated port columns located at the peripherals of the storage grid and to transport these storage containers down to an access station for further handling of items stored within the containers. Traffic congestion of container handling vehicles may also represent an important cause of low efficiency. These disadvantages will be particularly evident when operating large storage systems, for examples storage grids of 700x700 storage cells or larger.

It is therefore an objective of the invention to provide a picking system that may increase the through-put rate of items compared to prior art systems.

Another objective of the invention is to provide a picking system that enables the robotic operator to pick more items within its working area compared to prior art systems.

Yet another objective of the invention it to provide a storage system that reduces the risk of congestion of container handling vehicles in the area surrounding the port columns.

### SUMMARY OF THE INVENTION

The invention is set forth in the independent claims and the dependent claims describe certain optional features of the invention.

In a first aspect, the invention concerns a product handling system suitable for retrieving and storing products within storage containers.

The product handling system comprises a rotatable container carousel and a robotic picking device.

The rotatable container carousel further comprises a rotational device having a rotational carousel axis *C_{C}* and a storage container support/holder connected to the rotational device at a radial carousel distance *R_{C}* between the rotational axis *C_{C}* of the rotational device and a horizontal center point of the horizontal storage container support, allowing rotation through at least a storage container loading position and a storage container accessing position. The storage container support should preferably be configured such that a base of the storage container is horizontal. Further, if the rotational axis *Cc* is vertical (being the preferred orientation), any storage container stored on the support should maintain its initial orientation (for example horizontal) as the carousel rotates between the container loading and container accessing positions. The rotation of each container carousel preferably comprises a storage container unloading position adjacent the storage container loading positions.

The robotic picking device further comprises a robotic base at a base center position, a first robotic segment / arm connected to the robotic base and a gripper / picking tool connected at least indirectly to the first robotic segment at an adjustable radial gripper distance *R_{G}* between the base center position and the gripper such that the gripper is at least within reach of the storage container accessing position, more preferably within reach of any location inside a storage container supported on the storage container support in the storage container accessing position, i.e. including positions within the storage container most distal to the robotic base. Alternatively, or in addition, the storage container support may be made tiltable around a horizontal rotational axis in order to ensure that all items may be within reach of the robotic picking device.

The gripper may for example be connected directly to a telescopic first robotic segments, or via one or more other robotic segments. Note that 'radial' is defined as an orientation perpendicular to the rotational axis *C_{C}.* Hence, if *C_{C}* is vertical, the radial orientation is horizontal.

The gripper is configured to releasably grab a product from within a storage container positioned on the storage container support when the container carousel is in the storage container accessing position. Moreover, the rotatable container carousel and the robotic picking device are configured to be in signal communication with a control system, and preferably in wireless signal communication. The gripper may be a claw, a hook, a magnet or a combination thereof. The gripper may also comprise other tools such as cameras operating in visual, infrared and/or ultraviolet frequencies to enable monitoring of the content of the storage container.

The robotic picking device may also comprise a picking device controller configured to receive product orders from a warehouse management system.

The distance *R_{C}* should be regulated such that the gripper may have access to at least a part of an inner volume of a storage container when supported on the storage container support.

Said first robotic segment may be rotatably connected to the robotic base with a first rotational axis *C_{RV}.* Furthermore, the first robotic segment may be rotatably connected to the robotic base at a height corresponding to the height of the horizontal storage container support. However, other configurations may be envisaged such as an overhead robotic picking device where the robotic base is mounted in an elevated position relative to the horizontal storage container support. Furthermore, instead of a rotatable segment / arm rotatably connected to the robotic base, the robotic picking device may comprise a plurality of non-rotatable robotic arms / segments connected to the robotic base. One specific example is pairs of suspended telescopic rods having sufficient reach to perform the picking operation from the storage containers. In general, the height of components constituting the robotic picking device and the height of the horizontal storage container support should be such that the gripper may easily grab items within the storage container supported on the storage container support being set in the storage container accessing position. As mentioned above, the robotic picking device should preferably be configured such that the gripper has access to the entire inside volume of the storage container.

In an exemplary configuration the robotic picking device further comprises a second robotic segment / arm rotatably connected to the first robotic segment. The longitudinal orientation of the second robotic segment is adjustable relative to the first rotational axis *C_{RV},* for example via a rotatable joint. Moreover, the radial distance R_{G} may be made adjustable by letting the gripper slide on the second robotic segment and/or use a telescopic second robotic segment. The latter configuration may also be envisaged for the first robotic segment.

The second robotic segment / arm may be rotatably connected to a first end of the first robotic segment, Further, the robotic picking device may comprise a third robotic segment comprising a first end rotatably connected to a second end of the second robotic segment, for example via a rotatable joint, and a second end at least indirectly connected to the gripper, for example via another rotatable joint and/or other rotatable robotic segment(s). The connection between the second end and the gripper may be configured to create a wrist-like function. The third robotic segment may have a radial rotational axis *C_{RR}* perpendicular to the vertical rotational axis *C_{RV}.*

In another exemplary configuration the rotatable container carousel further comprises a carousel arm extending radially from a central section / horizontal center point of the rotational device to support the storage container support and a carousel motor configured to rotate the carousel arm around the vertical rotational axis *C_{C}.* The storage container support may in this configuration be arranged at an end of the carousel arm distal to the vertical rotational axis *C_{C}.* For example, a plurality of carousels arms may extend the radial carousel distance *R_{C}* in different radial directions. Alternatively, or in addition, the carousel arm may comprise several carousel arm segments pivotably arranged end-by-end.

In yet another exemplary configuration the product handling system further comprises an access station arranged at least partly above the rotatable container carousel(s), wherein the access station is configured to allow an operator (human and/or robotic) access to content within a storage container when supported on the storage container support constituting part of the carousel(s) in question. Said access may for example be achieved by arranging an access opening within the access station at a location above a possible horizontal position of the storage container support. If the operator is a human, such access opening should be at a location where the operator may safely and easily reach the content within the container. Due to the particular arrangement of the access station and at least part of the rotatable container carousel, this exemplary configuration allows for effective consolidation of products between containers.

In yet another exemplary configuration the product handling system comprises a plurality of the rotatable container carousels distributed around the robotic picking device, preferably at an even number such as 4 or 6. Each of the carousels may be configured such that the horizontal storage container support(s) can be rotated to a position within a maximum radial extent of the robotic picking device, i.e. rotated between the storage container loading position where the storage container is placed on the support and the storage container accessing position where the gripper has access to the items within the storage container. Such a multiple carousel configuration allows container handling vehicles to drop off/pick up from two sides above the robotic picking device. This may reduce congestion on a connected rail system when the product handling system form part of the automated storage and retrieval system. Further, the configuration allows a row of drop off/pick up port columns allowing storage containers to be pre-assembled by the robotic picking device with product items transported from different zones of the storage system, for example, a refrigerated and a non-refrigerated zone.

In addition to being rotated around the rotational carousel axis *C_{C},* one or more of the storage container support(s) may be rotated/pivoted relative to the carousel arm. For example, each container support of a carousel may be rotated around a vertical rotational axis and/or pivoted/tilted around a horizontal rotational axis. Such adjustments of the container support, and thereby also the storage container supported thereon, allows an optimization of the picking arrangement by the robotic picking device and/or the access of the operator at the access station.

In yet another exemplary configuration, the robotic picking device is configured to pick an item from a first storage container that has been positioned in a first container accessing position by a first rotatable container carousel and to transfer the item to a second storage container that has been positioned in a second container accessing position by a second rotatable container carousel.

In yet another exemplary configuration, each of the plurality of rotatable container carousels comprises a plurality of the horizontal storage container support, for example three or four, being distributed around the rotational device, and preferably coupled to the rotational device such that they may be rotated independently to each other. Each of these supports may be connected to the rotational device at the radial carousel distance *R_{C}*, i.e. where the mid horizontal center of the storage container on each support is located *R_{C}* away from *C_{C}.* Moreover, each container support may be coupled to the rotational device such that they may be rotated independently to each other.

The supports may be arranged rotationally symmetrical around the vertical carousel axis *C_{C},* i.e. spaced circumferentially around *C_{C}* with equal radial offsets.

In yet another exemplary configuration, said access station comprises an access station area for a human and/or a further robotic picking device arranged on a side of the access station distal from the above described robotic picking device. The access station is arranged at least partly above at least one, for example two, of the plurality of rotatable container carousels. I.e. one or more of the container carousels reaches under the access station area to offer up a storage container to an access opening of the access station area during rotation of the carousel.

In yet another exemplary configuration, the system is configuration such that a rotation of the horizontal storage container support(s) around the rotational axis *C_{C}* follows a circular trajectory with radius equal to the radial carousel distance *Rc*. The maximum radial gripper distance *R_{G}* is in this configuration at least the distance from the base center position to the circular trajectory, preferably at least the distance from the base center position to a position within the circular trajectory corresponding to the most distal part within a storage container supported on the storage container support.

In yet another exemplary configuration, the system further comprises a camera system comprising a camera configured to visually inspect contents within a storage container when the storage container support is oriented in, or approaching, a picking position and a camera transmitter configured to transmit, preferably wireless, information from the visual inspection of the contents to the control system.

For example, the product handling system may comprise a camera system comprising a camera base arranged above the rotatable container carousel and one or more cameras connected, at least indirectly, to the camera base. The camera system is configured such that the camera(s) may visually inspect contents within a storage container when the storage container support is oriented in, or approaching, the picking position, for example the rotational position of the carousel in which the support is located closest to the robotic base.

For example, the camera system may be a rotatable camera system, wherein one or more cameras are rotatably connected to the camera base. The latter configuration is particularly useful if the camera system involves only one camera.

The camera system may further comprise one or more camera arms coupled, preferably rotational, at one longitudinal position to the camera base, for example at or near one end of the respective camera arm. The camera(s) is/are in this configuration coupled to the camera arm(s) at another longitudinal position, for example at or near the opposite end.

Alternatively, or in addition, the camera may be arranged on the robotic picking device such as on the gripper, thereby mirroring its motion.

In yet an alternative, or additional, configuration, a camera may be installed above the storage container accessing position, or if applicable, above each of the storage container accessing positions.

In a specific configuration, the camera system comprises camera(s) and fiber optic cable(s) extending to the camera(s), In case of several fiber optic cables, the camera system may further comprise a fiber optic switch to select which of the fiber optic cable should transmit images within storage containers.

In a second aspect, the invention concerns an automated storage and retrieval system comprising:
- a product handling system in accordance with the product handling system described above;
- a rail or track system comprising a first set of parallel rails or tracks arranged in a horizontal plane *P* and extending in a first direction *X* and a second set of parallel rails or tracks arranged in the horizontal plane *P* and extending in a second direction *Y* which is orthogonal to the first direction *X,* which first and second sets of rails or tracks form a grid pattern in the horizontal plane *P* comprising a plurality of adjacent grid cells, each comprising a grid opening defined by a pair of neighboring rails or tracks of the first set of rails / tracks and a pair of neighboring rails or tracks of the second set of rails / tracks;
- a plurality of stacks of storage containers arranged in storage columns located beneath a storage section of the rail system, wherein each storage column is located vertically below a grid opening; and
- at least one port column located beneath a delivery section of the rail or track system and vertically aligned with at least one possible storage container loading position of the horizontal storage container support, wherein the at least one port column is void of storage containers; and
- a container handling vehicle comprising a lifting device for lifting storage containers stacked in the stacks above the storage section and drive means configured to drive the vehicle along the rail or track system in at least one of the first direction *X* and the second direction *Y.*

As a consequence, the product handling system should be arranged relative to the rail or track system such that the horizontal storage container support(s) of the rotatable container carousel(s) may be arranged in vertical alignment with the at least one port column.

In an exemplary configuration of the system, the delivery section of the rail or track system extends above at least a region of the product handling system, i.e. forming a bridge across which the container handling vehicle may move.

In another exemplary configuration of the system, the product handling system comprises a plurality of the rotatable container carousels distributed around the robotic picking device such that the storage container support of each of the rotatable container carousels may be rotated within a maximum radial extent / reach of the robotic picking device. Such a system may further comprise at least two port columns for each of the plurality of rotatable container carousels, where one of the port columns is a loading port column dedicated for placing a storage container onto a storage container support of a carousel and another of the port columns is an unloading port column dedicated for receiving a storage container from the same support or a different of either the same carousel or another carousel.

Such a configuration has the advantage of increasing the delivery and storage time efficiency due to the combination of faster vehicle access of storage containers and avoidance of vehicle conglomeration at port columns. For example, two vehicles may cooperate side by side, or front by front, where one vehicle is delivering a storage container to one support on the carousel and the other vehicle is receiving a storage container from another support on the carousel. And with increasing number of container carousels with corresponding increase in port columns, the drop and pick up capacity of the container handling vehicles increases quickly, providing the necessary buffering in balance with quicker picking operation of the robotic picking device.

The horizontal storage container support(s) of the rotatable container carousel may in one configuration be connected to the rotational device such that a storage container supported on the support maintain its orientation during rotation. This can be achieved by for example allowing the support to rotate relative to the rotational device by use of a motor and/or adjusting the orientation of the support by fixed guiding tracks.

In another configuration, the support(s), and thereby also the storage container(s), is/are allowed to rotate with the rotation of the rotational device, for example by use of a simple turntable. This configuration may be advantageous due to higher simplicity and higher space efficiency.

In a preferred configuration, the storage containers are lowered with their length aligned to a circumferential direction of the carousel. This particular container orientation facilitates receival from, and delivery to, adjacent port columns. However, alternative container orientations may be envisaged such as storage containers having their length oriented along the radial direction of the carousel.

One could also envisage a configuration where each, some or all of the support(s) in the carousel are tiltable relative to the horizontal plane, i.e. having also a rotational axis non-parallel to the rotational carousel axis *C_{C}.* For example, the support(s) may be tiltable around a horizontal rotational axis in direction towards the robotic picking device in order to ease the access to the content within the storage container and/or reducing the required radial extend of the robotic picking device.

In yet another exemplary configuration of the system, the rail or track system extends on at least two opposite sides of the product handling system, wherein the at least one port column, preferably at least two, is/are arranged at both sides.

In a third aspect, the invention concerns a method of handling contents within storage containers stored in an automated storage and retrieval system as described above.

The method may comprise the following steps:
A) rotating the rotational device of the rotatable container carousel to a rotational position where the storage container support is located vertically aligned below a target grid cell of the rail system, i.e. below a port column such as a dedicated loading port column,
B) moving a container handling vehicle carrying a target storage container with a target content on the rail system to the target grid cell above the horizontal storage container support,
C) placing the target storage container onto the storage container support by lowering the target storage container through the target grid cell and the underneath port column using the lifting device,
D) if the target storage container is outside a maximum radial extent *R_{G,max}* of the robotic picking device, rotating the rotational device such that the storage container support with the target storage container is within the maximum radial extent *R_{G,max}* and
E) picking the target content from within the target storage container by use of the gripper,
wherein the steps A)-E) are controlled, preferably wireless, by the control system.

If the container handling vehicle has a cantilever construction, the storage container can be placed on the storage container support outside the rail of track system. In this case, step C) does not involve lowering the target storage container through any grid cell, and possible also not a port column arranged underneath. Also, the location of the support after rotation should be changed accordingly in step A).

Moreover, step A) is performed since, normally, the initial position corresponds to a position of the container support being beyond a maximum radial extent *R_{G,max}* of the robotic picking device.

If the product handling system further comprises a plurality of the rotatable container carousel and an access station as described above, the method may further comprise the following steps:
F) placing, by use of the gripper, the target content into an access storage container supported on the storage container support of one or more rotatable container carousels arranged nearest the access station measured in the horizontal direction.

### BRIEF DESCRIPTION OF THE DRAWINGS

The following drawings depict alternatives of the present invention and are appended to facilitate the understanding of the invention. However, the features disclosed in the drawings are for illustrative purposes only and shall not be interpreted in a limiting sense.
Fig. 1 is a perspective view of a prior art automated storage and retrieval system.
Fig. 2 is a perspective view of a prior art container handling vehicle having a centrally arranged cavity for carrying storage containers therein.
Fig. 3 is a perspective view of a prior art container handling vehicle having a cantilever for carrying storage containers underneath.
Fig. 4 is a perspective view of a storage container and product items stored in the storage container.
Fig. 5 is a perspective side view of an automated storage and retrieval system according to a first embodiment of the invention.
Fig. 6 is a perspective top view of a product handling system according to the invention comprising four container carousels and one rotational robotic picker.
Fig. 7 is a perspective view of a container carousel comprising three storage container supports.
Figs. 8 A and B are perspective side views of two types of robotic pickers suitable for use in a product handling system according to the invention, wherein figs. 9 A and B show an example of a single arm robotic picker and a multi-joint robotic picker, respectively.
Fig. 9 is a top view of a product handling system illustrating movements of the container carousels and the rotational picker.
Fig. 10 is a perspective view of part of an automated storage and retrieval system according to a second embodiment of the invention.
Fig. 11 is a perspective view of a larger part of the automated storage and retrieval system shown in fig. 10.
Fig. 12 is a perspective view of part of a product handling system according to an embodiment of the invention, including a multi-joint robotic picker and a camera system.
Fig. 13 is a perspective view of a product handling system according to another embodiment of the invention, including a multi-joint robotic picker and an access station.

### DETAILED DESCRIPTION OF THE INVENTION

In the following, different alternatives will be discussed in more detail with reference to the appended drawings. It should be understood, however, that the drawings are not intended to limit the scope of the invention to the subject-matter depicted in the drawings. Furthermore, even if some of the features are described in relation to the systems only, it is apparent that they are valid for the methods as well, and vice versa.

Figs 1-4 show a known automated storage and retrieval system and is described in detailed above in respect of the chapter 'background and prior art'. Such a prior art automated storage and retrieval system can be used in conjunction with the product handling system which will now be described with reference to the remaining figures and their related description

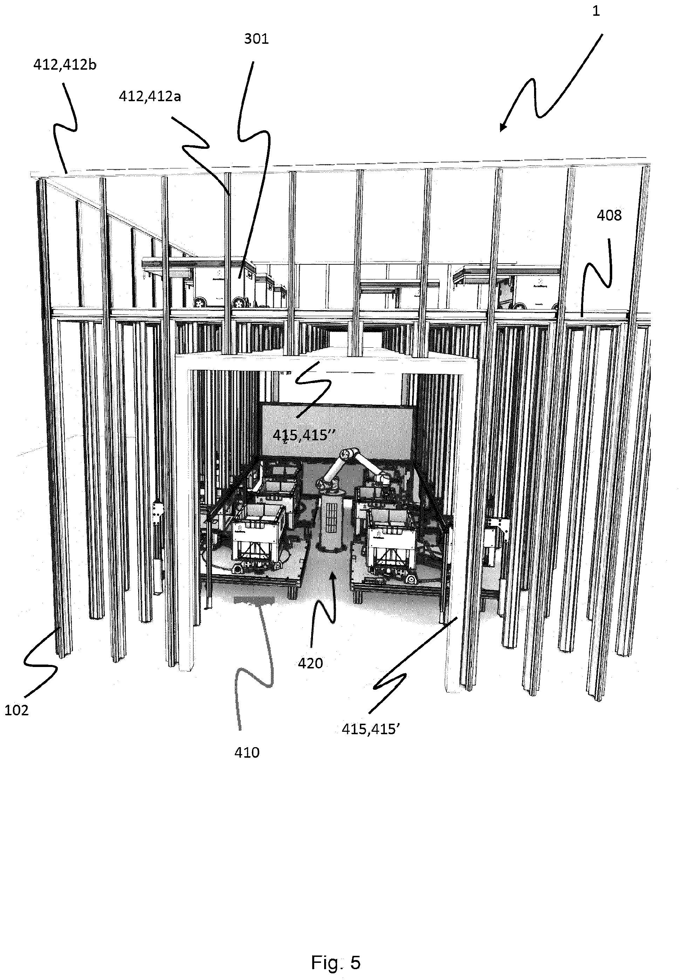

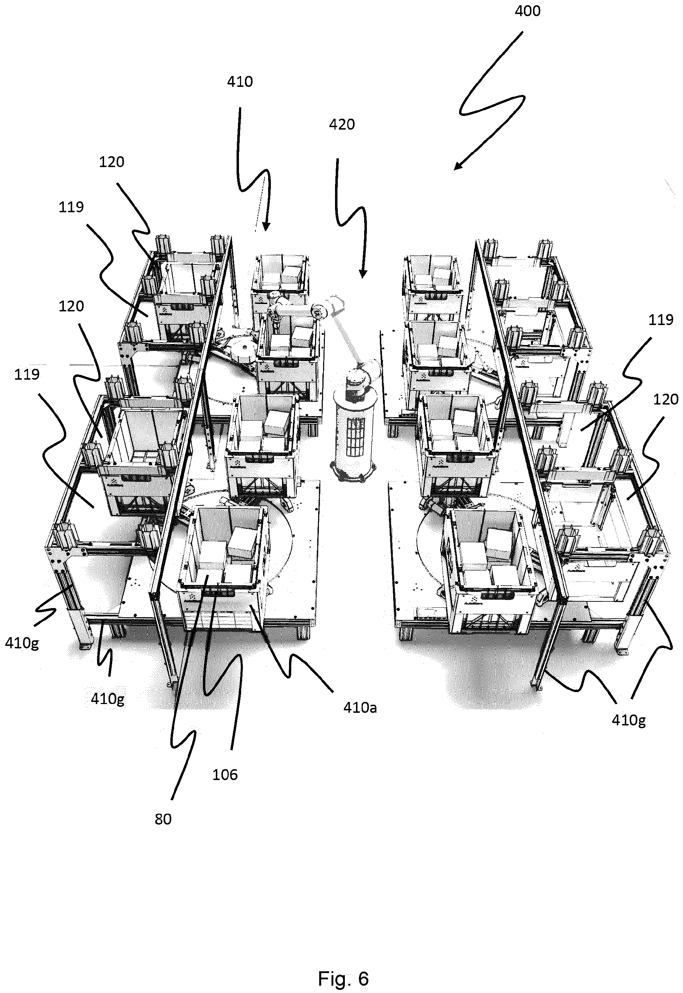

Figs. 5 and 6 show perspective views of a product handling system 400 seen from the side and from above, respectively. This exemplary system 400 comprising four container carousels 410 distributed mirror symmetrically in *X* and *Y* directions around a robotic picking device or robotic picker 420.

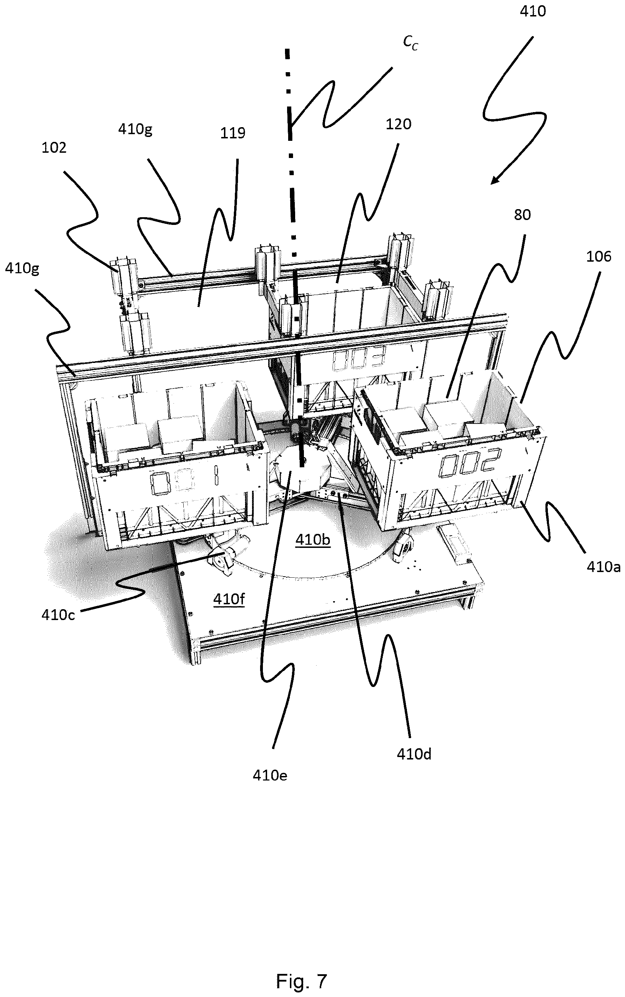

As best shown in fig. 7, each container carousel 410 comprises
- a carousel support 410f,
- a circular carousel base 410b connected to the carousel support 410f,
- a rotary disc 410e fixed at a center point of the circular carousel base 410b,
- three carousel arms 410d extending between the rotary disc 410e and a structure at the radial boundary / circumference of the circular carousel base 410b,
- one or more carousel motors 410b causing rotation of the carousel arms 410d around the rotary disc 410e and
- three storage container supports / holders 410a into or onto which storage containers 106 may be supported.

The container supports 410a are connected to or near the end of the respective carousel arms distal to the rotary disc.

The one or more carousel motor 410b may comprise sensors to detect position of the carousel arms 410d relative to the carousel support 410f and/or the carousel base 410b.

Further, the carousel support 410f and the carousel base 410b may be one integrated unit.

The container carousel 410 is preferably configured such that all the carousel arms 410d may rotate individually (with separate motors). However, as an alternative or additional configuration, they may rotate as one unit.

Alternatively, the circular carousel base 410b may be *rotationally* connected to the fixed carousel support 401f via carousel motors 410c and the carousel arms 410d may be rotationally coupled at one end to the rotary disc 410e and non-rotationally fixed to the carousel base 410b.

In order to allow the storage containers 106 to keep their orientation during rotation, or to choose a desired orientation other than the initial, one or more belts may be arranged around an axle fixing the rotary disc 410e to the carousel base 410b and around the coupling point of each of the storage container supports 410a. The latter configuration requires that the coupling between the support 410a and the respective carousel arm 410e is rotatable. Note however that rotation of the storage containers 106 as exemplified in fig. 7 represents an exemplary configuration only.

As will be further described below, the container carousel 410 also includes a carousel framework 410g to integrate part of the carousel 410 to the framework structure 100.

A suitable container carousel 410 is described in patent publication WO 2012/026824 which is hereby incorporated by reference.

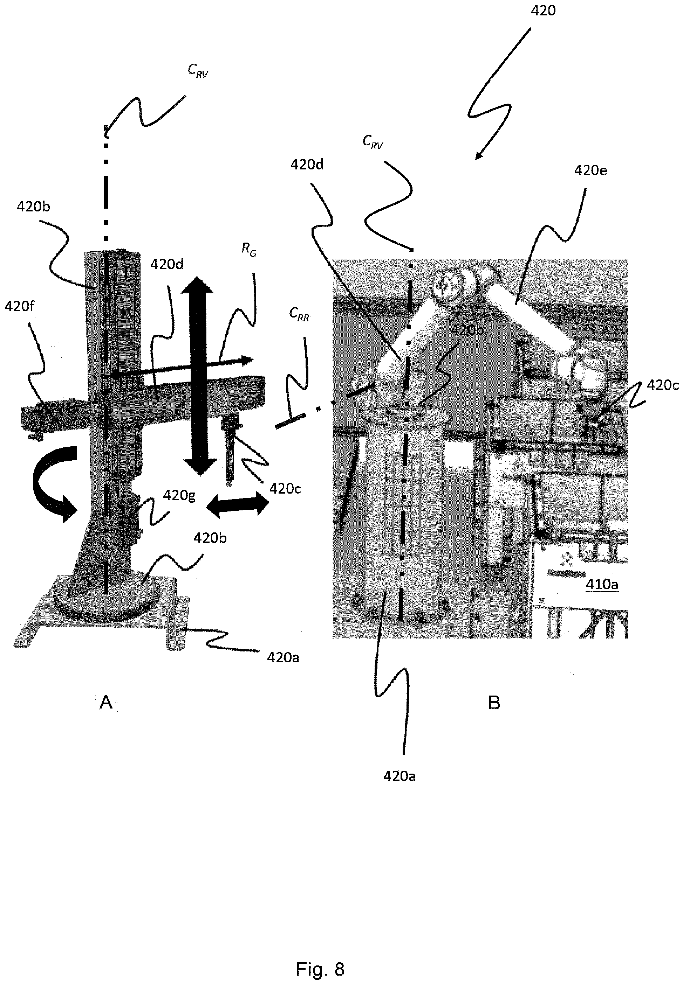

Fig. 8 shows two different types of robotic pickers 420 suitable for the inventive product handling system 400, where fig. 8A shows a single arm robotic picker and fig. 8B shows a multi-joint robotic picker. For both types, the robotic pickers 420 is fixed to a low base. However, other types of robotic picker are envisaged such as robotic pickers fixed at a height above the container carousel 410.

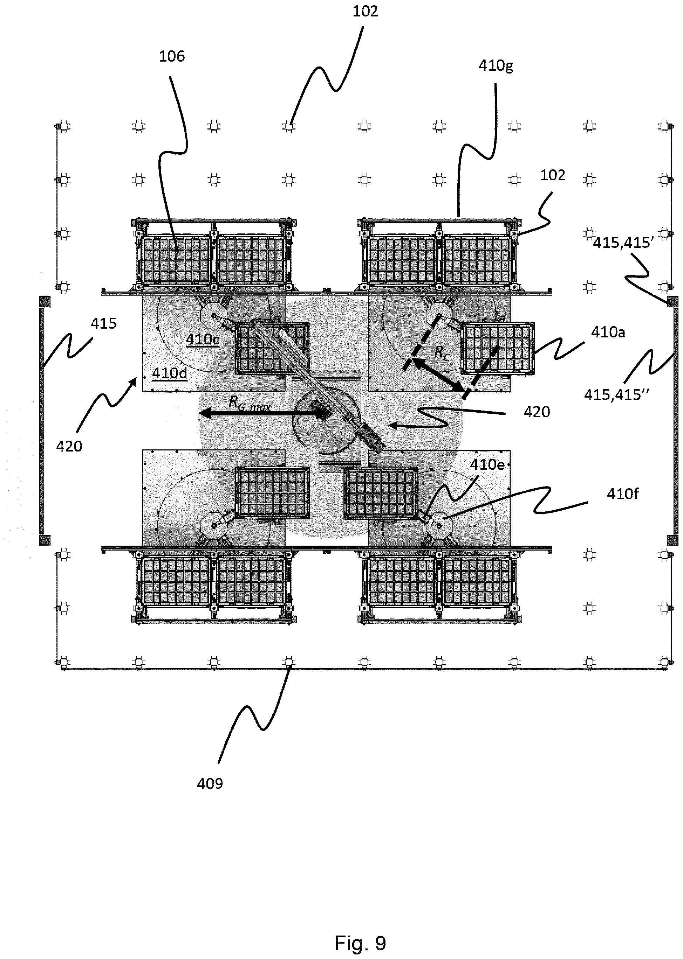

The general design criteria for such robotic pickers 420 are best illustrated in fig. 9 showing a top view of an exemplary product handling system 400 with four container carousels 410, each comprising three storage container supports 410a, and one robotic picker 420 arranged in the middle between the four container carousels 410.

The robotic picker 420 is designed to allow one or more grippers or picking tools 420c to move in the *X-Y-Z* direction relative to a center location of the robotic picker 420, for example relative to the center position of a robotic base 420a fixed on the floor, and to pick up or put down items 80 stored in storage containers 106 of each container carousels 410. Hence, a robotic picker area *A_{R}* covering possible locations of the gripper 420c should be sufficiently large to at least partly overlap a container carousel area π*R_{C}²* set up by the circular movements of the storage container supports 410 with radius *R_{C}*. As illustrated in fig. 9, the robotic picker area *A_{R}* is preferably a circular disc with a radius of *R_{G,max},* where *R_{G,max}* is long enough to ensure access for the robotic picker 420 to the entire inner volume of the storage container 106 when placed in a storage container accessing position.

For the single arm robotic picker 420 (fig. 8A), this general function is achieved by a vertical section 420b rotationally mounted on a robotic base 420a, alternatively directly to the floor, a radial section 420d movably mounted to the vertical section 420b, a radial section motor 420g enabling controlled vertical movement of the radial section 420d along the vertical section 420b, the gripper / picking tool 420c movable mounted to the radial section 420d and a gripper motor 420f enabling controlled radial movements of the gripper 420c along the radial section 420d. A vertical rotational axis *C_{RV}* of the vertical section 420b is indicated in fig. 8A. Further, the double arrow in fig. 8A indicates the possible movements of the gripper 420d along the radial section 420d by a radial gripper distance *R_{G}*. The height of the robotic base 420a and the maximum height of the radial section 420d relative to the robotic base 420a is made such that gripper 420c may have access to the inside volume of a storage container 106 supported on the storage container support 410a of the relevant container carousel 410.

The multi-joint robotic picker 420 shown in fig. 8B comprises a robotic base 420a in the form of a vertical column extending a distance from the floor, a vertical section or first robotic segment 420b rotationally mounted on an upper end of the robotic base 420a with a vertical rotational axis *C_{RV},* a second robotic segment 420d rotationally connected to the first robotic segment 420b with a radial rotational axis *C_{RR}* perpendicular to *C_{RV},* a third robotic segment 420e rotationally connected to an end of the second robotic segment 420d with the radial rotational axis *C_{RR}* and the gripper 420c rotationally connected the opposite end of the third robotic segment 420e. As for the robotic picker 420 shown in fig. 8A, this robotic picker 420 is configured such that the gripper 420c may have access to the inside volume of the relevant storage container 106. This may for example be achieved by ensuring that the height of the robotic base 420a is at least the height of the storage container support(s) 410a of the container carousel 410.

Note that the number of robotic segments 420a,d,e constituting the robotic arm and the direction of rotational axes *C_{RV}, C_{RR}* may be varied according to the need of accuracy and/or flexibility and/or reach.

A product handling system 400 in which the robotic picker 420 does not have an adjustable radial gripper distance RG may be envisaged. Further, the robotic picker 420 does not need to be rotatable in all configurations. For example, the entire robotic picker 420, or parts of the robotic picker 420 including the gripper 420c, may be suspended from overhead rails, thereby allowing movements to the relevant storage container 106 to be handled by translation and/or rotation.

With particular reference to figs. 5, 10 and 11, the product handling system 400 is located at least partly inside a compartment / space of a storage and retrieval system 1, wherein each container carousel 410 is arranged partly inside and partly outside the compartment, The part outside the compartment is within a carousel space below port columns 119,120 for receiving / delivering storage containers 106 from / to the container handling vehicles 301. The carousel space can be set up by a dedicated carousel framework 410g (fig. 7). The compartment hence forms a volume within the framework structure 100 which does not include columns for storing and/or guiding storage containers.

Fig. 5 shows a first embodiment of the system 1 wherein a rail system 108 (onto which container handling vehicles 301 may move as described in the above section entitled 'background and prior art'), extends across the compartment, i.e. above the product handling system 400.

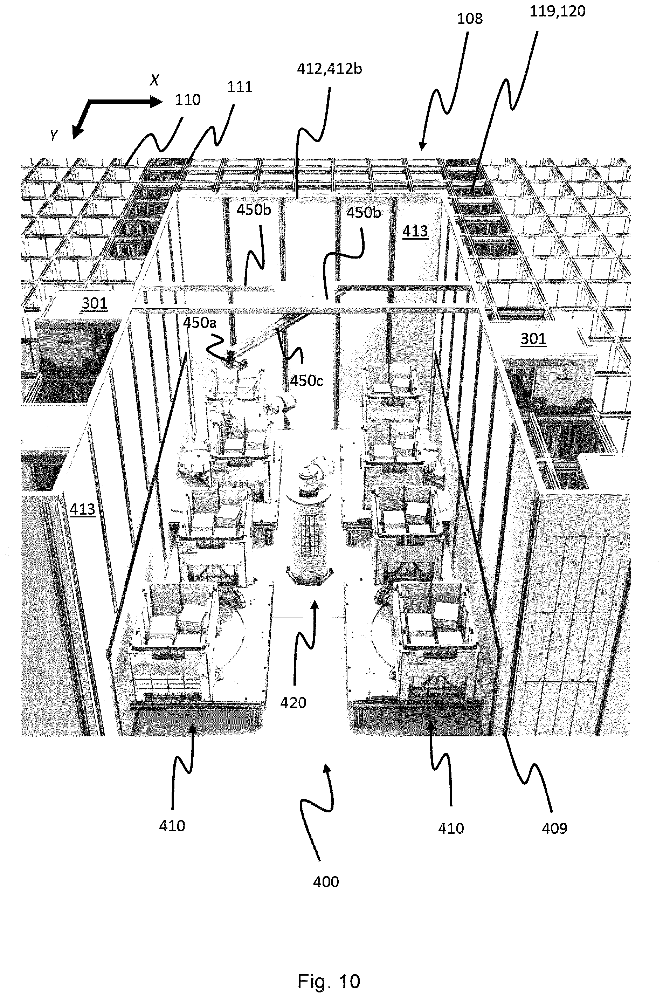

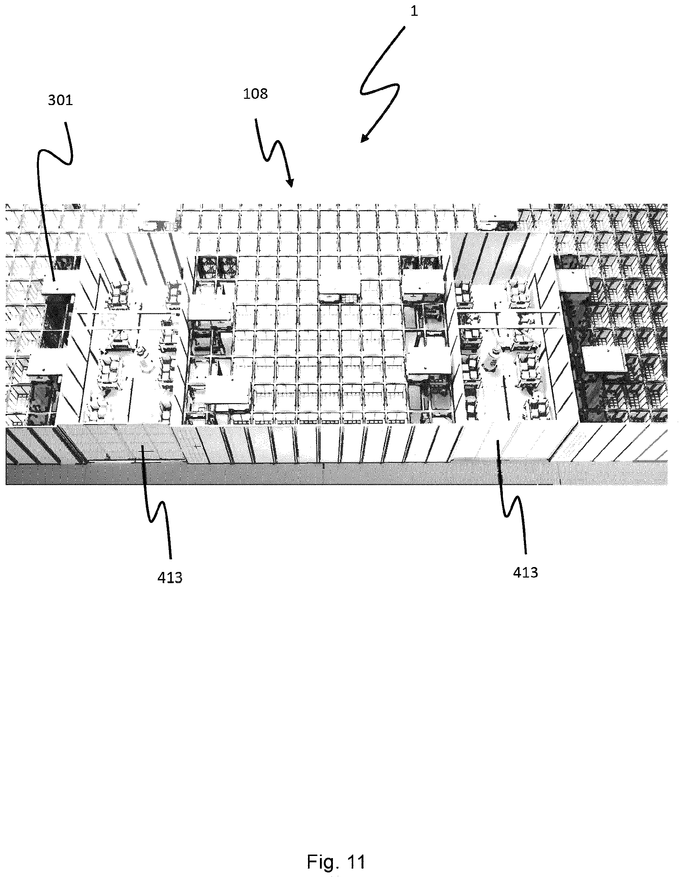

In contrast, a second embodiment of the system 1 is shown in figs. 10 and 11 where the rail system 108 terminates at the borders of said compartment, hence preventing the container handling vehicles 301 to move directly above the product handling system 400.

For both embodiments, several port columns 119,120 (as described in respect to the prior art system in fig. 1) are arranged along the lateral / horizontal borders of the compartment such that at least one of the storage container supports 410a of each container carousel 410 may be rotated into vertical alignment with a port column 119,120. See e.g. figs. 5-7 and 9.

The area of the rail system 108 arranged directly above the port columns 119,120 and the area of the rail system 108 arranged directly above the stacks 107 are herein referred to as delivery section and storage section, respectively.

In fig. 6, showing four container carousels 410 and one robotic picker 420, two adjacent port columns 119,120 are arranged above each of the container carousels 410. The first of three storage containers 106 for each container carousel 410 is shown vertically aligned with a receiving port column 119 after having been lowered down from the rail system 108 by the container handling vehicle 301, the second storage container 106 has been rotated into a horizontal position within reach of the depicted robotic picker 420 and the third storage container 106 is in position to be rotated into vertical alignment with a delivery port column 120 for being raised up to the rail system 108 by the container handling vehicle 301. The third storage container 106 may alternatively, or in addition, be within reach of another robotic picker 420 and/or within reach of an operator at an access station 430 (see description below) for further handling.

Having a configuration with four or more container carousels 410 surrounding a common robotic picker 420 increases not only handling efficiency of storage containers 106 (e.g. preventing conglomeration at the port columns 119,120 on the rail system, increasing speed of picking items 80 from the containers 106), but also decreases the necessary components and reduces overall complexity.

In case of the first embodiment of the system (fig. 5), the container handling vehicles 301 may also deliver storage containers 106 to the container carousels 410 to all of the storage container supports 410a without necessitating rotation of the container carousel 410. For example, the container handling vehicle 301 may lower a storage container 106 through one or two of the port columns 119,120 to the respective two supports 410a being vertically aligned below the port columns 119,120 as well as through a grid cell directly above the remaining one or two supports 410a located within the compartment.

Alternatively, or in addition, the container handling vehicles 301 may lower a storage container 106 with its content 80, directly within the robotic picker area A_{R} such that the gripper 420c gets access to the product item 80 without going via an adjacent container carousel 410. Hence, the gripper 420c may pick (or place) the item 80 when the storage container 106 is suspended in the lifting device 304. In this case, the gripper 420c may, after having picked the item 80, transfer it to another storage container 106 supported on a container carousel 410.

In fig. 9, each of the four container carousels 410 has positioned two of their storage container supports 410a such that the first and second storage containers 106 are vertically aligned with adjacent first and second port columns 119,120. For three of the four container carousels 410, the third storage container 106 is within the robotic picker area *A_{R},* i.e. within reach of the gripper 420c.

The adjacent first and second port columns 119,120 may be directional columns, where one is dedicated for transporting storage containers 106 from the container carousel 410 to the rail system 108, and the other is for the opposite direction. This particular configuration will increase storage and retrieval efficiency, as well as to decrease risk of congestion of container handling vehicles 301 and/or storage containers 106 on the rail system 108.

As mentioned above, and again with reference to fig. 5, the lateral borders of the compartment may be defined by a compartment framework 415,415',415" including vertical members 415' and horizontal members 415''. For the first embodiment of the system 1, the upright members 102 constituting the framework structure 100 may be fixed between the horizontal members 415" and the rail system 108 above the compartment.

Further, the compartment may comprise compartment walls 413 as depicted in figs. 10 and 11, separating the framework structure 100 with the port columns 119,120 from the robotic picker 420. Each container carousel 410 will thus be located on both sides of such compartment walls 413.

To inter alia prevent the container handling vehicles 301 of moving beyond the delivery section, a fence 412,412a,412b may be installed on or at the rail system 108, as depicted in fig. 5. The fence 412,412a,412b can also simply constitute a continuation of the compartment walls 413 as depicted in figs. 10 and 11.

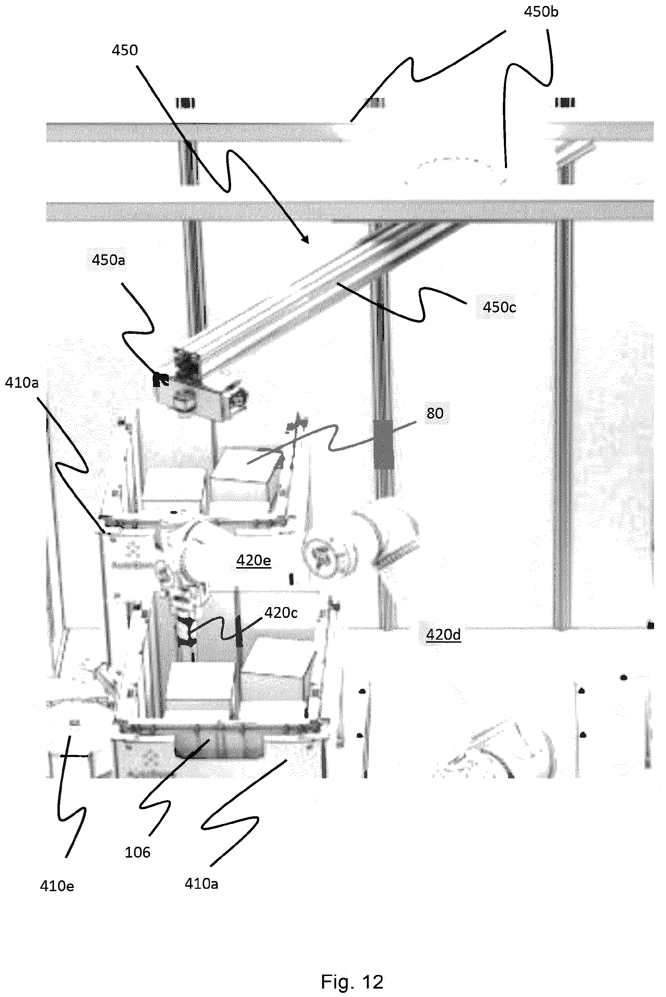

A camera system 450 may be installed for visual monitoring of the product items 80 within storage containers 106 supported on container carousels 410. For the particular exemplary configuration shown in figs. 10-12, the camera system 450 comprises a camera base 450b, a camera arm 450c rotatably mounted on the camera base 450b and a camera displaceably mounted on or at an end of the camera arm 450c. The camera base 450b is in fig. 10 depicted as a disc fixed to two transverse beams extending across the compartment in height of the rail system 108. However, any camera system 450 may be envisaged that allows the desired visual monitoring of the product items 80. For example, a camera may be connected to the gripper 420c in addition to, or as an alternative to, the above described camera system 450.

Moreover, the camera system 450 may further comprise a camera transmitter in order to allow transmittal of content information via the control system 500 to for example an operator. This visual information may also be transmitted directly from the control system 500 to the robotic picker 420, or via the operator, in order for the robotic picker 420 to perform desired action steps such as locating and picking correct item 80 in correct storage container 106. Transmittal of such information directly or indirectly to the container carousel(s) 410 may also be envisaged, for example to optimize rotations of the carousel arms 410d and/or optimize positioning of the container supports 410a (rotation and/or tilt).

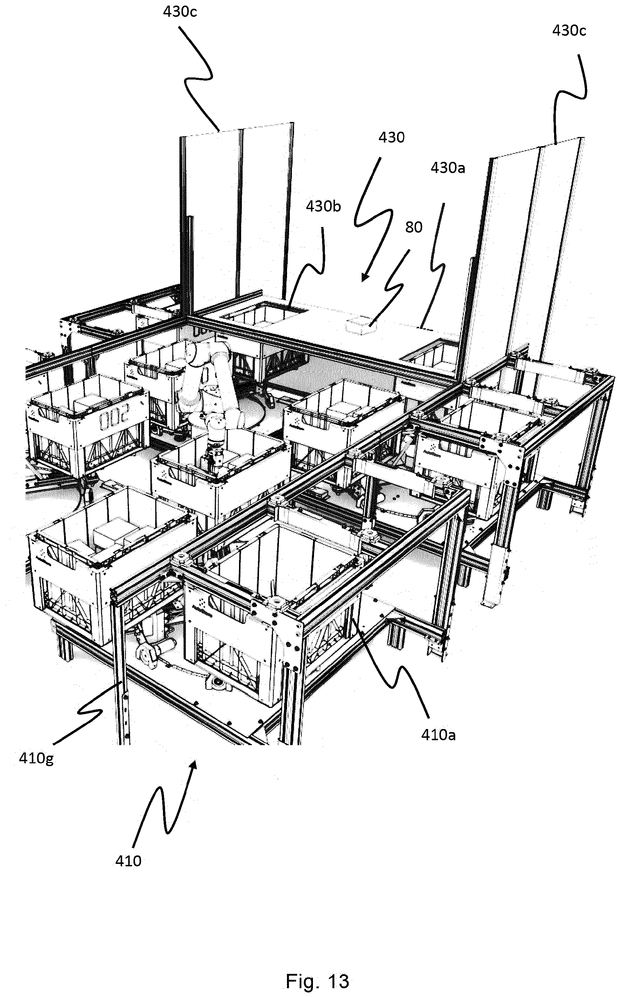

With reference to fig. 13, the product handling system 400 preferably also includes an access station 430 for receiving and delivering storage containers 106. Such access station 430 may be operated by a human and/or robotic operator.

In the particular configuration shown in fig. 13, the access station 430 comprises access station bench 430a displaying one or more access openings 430b. The access bench 430a is arranged relative to one or more container carousels 410 such that the access opening(s) 430b create(s) an access to the product items 80 for the operator when the relevant storage container 106 is placed vertically below the opening 430b by rotation of the storage container support 410a. Vertical side panels 430c are shown arranged on both sides of the access station bench 430a. The presence of the access station 430 in the above described product handling system 400 provides for a further ease of the retrieval and storage process of items 80 from/to the automated storage and retrieval system 1, in particular at the human operator interface.

Having an automated storage and retrieval system which combines the use of the prior art storage system 1 as shown in figs. 1-4 with the inventive product handling system 400 increases the potential throughput of storage containers 106 from/to the storage columns 105 significantly. This advantageous consolidating effect between the product handling system 400 and the storage system 1 is further increased when the product handling system 400 comprises several container carousels 410 per robotic picker 420 and one or more port columns 119,120 operationally coupled to each container carousel 410. For example, the duty times between the drop off / pick up of storage containers 106 by the container handling vehicles 301 and the picking operations of items 80 by the operator at the access station 430 are likely to decrease since, normally an operator may handle items 80 considerably faster than the container handling vehicles 301 can service the port columns 119,120, for example more than four times faster.

Furthermore, the use of product handling system 400 comprising a container carousel 410 with several storage container supports 410a, and in particular a product handling system 400 comprises a plurality of such container carousels 410, may reduce the risk of conglomeration by container handling vehicles 301 at the port columns 119,120 considerably.

The container carousel 410 and the robotic picker 420 are in signal communication via the control system 500, thereby allowing continuous optimization of the handling of the items 80, both in respect of time and storing/retrieval. When the number of intercommunicating parts increases, such as the containers carousels 410, the container supports 410a, the robotic pickers 420, the access station 430 and the camera system 540, this signal communication, which preferably is wireless, further increases the potential of obtaining a more efficient and reliable storage system 1 when all information is acquired, processed and optimized by a computer program executed by a computer.

### REFERENCE NUMERALS:

| | |
|---|---|
| 1 | Storage and retrieval system |
| 80 | Product items / content (of storage container) |
| 100 | Framework structure / prior art storage grid / second storage grid |
| 102 | Upright members of framework structure |
| 103 | Horizontal members of framework structure |
| 105 | Storage column |
| 106 | Storage container |
| 106' | Particular position of a storage container / target storage container |
| 107 | Stack |
| 108 | Prior art rail system |
| 110 | Parallel rails in first direction (*X*) |
| 110a | First rail in first direction (*X*) |
| 110b | Second rail in first direction (*X*) |
| 111 | Parallel rail in second direction (*Y*) |
| 111a | First rail of second direction (*Y*) |
| 111b | Second rail of second direction (*Y*) |
| 115 | Grid opening |
| 119 | First port column |
| 120 | Second port column |
| 201 | Single cell container handling vehicle |
| 201a | Vehicle body of the single cell container handling vehicle 101 |
| 201b | Drive means / wheel arrangement, first direction (*X*) |
| 201c | Drive means / wheel arrangement, second direction (*Y*) |
| 301 | Cantilever container handling vehicle |
| 301a | Vehicle body of the cantilever container handling vehicle 301 |
| 301b | Drive means in first direction (*X*) |
| 301c | Drive means in second direction (*Y*) |
| 304 | Lifting device |
| 400 | Product handling system |
| 410 | Container carousel |
| 410a | Storage container holder / storage container support |
| 410b | Carousel base |
| 410c | Carousel motor |
| 410d | Carousel arms |
| 410e | Rotary disc |
| 410f | Fixed carousel support / floor |
| 410g | Carousel framework |
| 412 | Fence |
| 412a | Upright members of fence |
| 412b | Transverse member of fence |
| 413 | Compartment wall |
| 415 | Compartment framework |
| 415' | Upright member of compartment framework |
| 415" | Transverse member of compartment framework |
| 420 | Robotic picking device / robotic picker |
| 420a | Robotic base |
| 420b | First robotic segment (with rotational axis *C_{RV}*) / vertical segment / vertical section |
| 420c | Gripper / picking tool |
| 420d | Second robotic segment (with rotational axis *C_{RR}* perpendicular to *C_{G})* / radial section |
| 420e | Third robotic segment (with rotational axis perpendicular to *C_{G})* / outer radial segment |
| 420f | Gripper motor (for displacement of gripper) |
| 420g | Radial section motor |
| 430 | Access station |
| 430a | Access station bench |
| 430b | Access opening |
| 430c | Side panel |
| 450 | Rotatable camera system |
| 450a | Camera |
| 450b | Camera base |
| 450c | Camera arm |
| 500 | Control system |
| *X* | First direction |
| *Y* | Second direction |
| *Z* | Third direction |
| *C_{C}* | Rotational carousel axis |
| *R_{C}* | Radial carousel distance |
| *C_{RV}* | Vertical rotational axis of first robotic segment / vertical section |
| *C_{RR}* | Radial rotational axis of the second robotic segment |
| *R_{G}* | Radial gripper distance |
| *A_{R}* | Robotic picker area |
| *W_{f}* | Width of storage container |
| *L_{f}* | Length of storage container |
| *H_{f}* | Height of storage container |

The disclosure comprises the following items:
1. A product handling system (400) for retrieving and storing products (80) within storage containers (106), wherein the product handling system (400) comprises
   - a rotatable container carousel (410) comprising
      - a rotational device (410b-e) having a rotational carousel axis *(C_{C})* and
      - a storage container support (410a) connected to the rotational device (410be) at a radial carousel distance (*R_{C}*) between the rotational axis *(C_{C})* of the rotational device (410b-e) and a horizontal center point of the storage container support (410a), allowing rotation through at least a storage container loading position and a storage container accessing position, and
   - a robotic picking device (420) comprising
      a robotic base (420a) at a base center position,
      a first robotic segment (420b) connected to the robotic base (420a) and
      a gripper (420c) connected at least indirectly to the first robotic segment (420a), the gripper (420c) being spaced at an adjustable radial gripper distance (*R_{G}*) between the base center position and the gripper (420c) such that the gripper (420) is as least within reach of the storage container accessing position,
      wherein the gripper (420c) is configured to releasably grab a product (80) from within a storage container (106) positioned in the storage container accessing position and
      wherein the rotatable container carousel (410) and the robotic picking device (420) are configured to be in signal communication with a control system (500).
2. The product handling system (400) in accordance with item 1, wherein the first robotic segment (420b) is rotatably connected to the robotic base (420a) with a first rotational axis *(C_{RV}).*
3. The product handling system (400) in accordance with item 2, wherein the robotic picking device (420) further comprises
   - a second robotic segment (420d) rotatably connected to the first robotic segment (420b), wherein a longitudinal orientation of the second robotic segment (420d) is adjustable relative to the first rotational axis (*C_{RV}*)*.*
4. The product handling system (400) in accordance with item 3 wherein
   - the second robotic segment (420d) comprises
      a first end rotatably connected to the first robotic segment (420b) and wherein the robotic picking device (420) further comprises
   - a third robotic segment (420e) comprising
      a first end rotatably connected to a second end of the second robotic segment (420d) and
      a second end at least indirectly connected to the gripper (420c).
5. The product handling system (400) in accordance with any one of the preceding items, wherein the rotatable container carousel (410) further comprises
   - a carousel arm (410d) extending radially from a central portion of the rotational device (410b-e) and
   - a carousel motor (410c) configured to rotate the carousel arm (410d) around the vertical rotational axis (*C_{C}*),
   wherein the storage container support (410a) is arranged at an end of the carousel arm (410d) distal to the vertical rotational axis (*C_{C}*)*.*
6. The product handling system (400) in accordance with any one of the preceding items, wherein the product handling system (400) further comprises
   - an access station (430) arranged at least partly above the rotatable container carousel (410),
   wherein the access station (430) is configured to allow an operator access to content (80) within a storage container (106) supported on the storage container support (410a).
7. The product handling system (400) in accordance with any preceding items,
   wherein the product handling system (400) comprises
   - a plurality of the rotatable container carousels (410) distributed around the robotic picking device (420) such that the storage container support (410a) of each of the rotatable container carousels (410) may be rotated within a maximum radial extent of the robotic picking device (420).
8. The product handling system (400) in accordance with item 7, wherein each of the plurality of rotatable container carousels (410) comprises a plurality of the storage container support (410a) distributed around the rotational device (410b-e).
9. The product handling system (400) in accordance with item 8,
   wherein each of the horizontal storage container supports (410a) is connected to the rotational device (410b-e) at the radial carousel distance (*R_{C}*).
10. The product handling system (400) in accordance with any one of items 7 to 9, wherein the product handling system (400) comprises
   - an access station (430) arranged at least partly above at least one of the rotatable container carousels (410), wherein the access station (430) comprises an access opening (430b) configured to allow an operator access to contents (80) within a storage container (106) supported on the storage container support (410a).
11. The product handling system (400) in accordance with any one of the preceding items, wherein the system (400) is configured such that a rotation of the storage container support (410a) around the rotational axis (*C_{C}*) follows a circular trajectory with radius equal to the radial carousel distance (*Rc*), and where the maximum radial gripper distance (*R_{G}*) is at least the distance from the base center position to the circular trajectory.
12. The product handling system (400) in accordance with any preceding items, wherein the product handling system (400) further comprises
   - a camera system (450) comprising
      - a camera (450a) configured to visually inspect contents (80) within a storage container (106) when the storage container support (410a) is oriented in, or approaching, a picking position and
      - a camera transmitter configured to transmit information from the visual inspection of the contents (80) to the control system (500).
13. The product handling system (400) in accordance with any preceding items, wherein the product handling system (400) further comprises
   - a rotatable camera system (450) comprising a camera base (450b) arranged above the rotatable container carousel (410) and a camera (450a) rotatably connected to the camera base (450b),
   wherein the rotatable camera system (450) is configured such that the camera (450a) may visually inspect contents (80) within a storage container (106) when the storage container support (410a) is oriented in, or approaching, a picking position.
14. The product handling system (400) in accordance with item 13, wherein the rotatable camera system (450) further comprises
   - a camera arm (450c) rotationally coupled at one longitudinal position to the camera base (450b),
   wherein the camera (450a) is coupled to the camera arm (450c) at another longitudinal position.
15. An automated storage and retrieval system (1) comprising:
   - a product handling system (400) in accordance with any one of items 1-14;
   - a rail system (108) comprising a first set of parallel rails (110) arranged in a horizontal plane (*P*) and extending in a first direction (*X*) and a second set of parallel rails (111) arranged in the horizontal plane (*P*) and extending in a second direction (*Y*) which is orthogonal to the first direction (*X*), which first and second sets of rails (110, 111) form a grid pattern in the horizontal plane (*P*) comprising a plurality of adjacent grid cells (122), each comprising a grid opening (115) defined by a pair of neighboring rails (110a, 110b) of the first set of rails (110) and a pair of neighboring rails (111a, 111b) of the second set of rails (111);
   - a plurality of stacks (107) of storage containers (106) arranged in storage columns (105) located beneath a storage section of the rail system (108), wherein each storage column (105) is located vertically below a grid opening (115);
   - at least one port column (119) located beneath a delivery section of the rail system (108) and vertically aligned with at least one possible storage container loading position of the storage container support (410a), the at least one port column (119) being void of storage containers (106); and
   - a container handling vehicle (301) comprising a lifting device (304) for lifting storage containers (106) stacked in the stacks (107) above the storage section and drive means (301b,c) configured to drive the vehicle (301) along the rail system (108) in at least one of the first direction (X) and the second direction (Y).
16. The automated storage and retrieval system (1) according to item 15, wherein the delivery section of the rail system (108) extends above at least a region of the product handling system (400).
17. The automated storage and retrieval system (1) according to item 15 or 16, wherein the product handling system (400) comprises
   - a plurality of the rotatable container carousels (410) distributed around the robotic picking device (420) such that the storage container support (410a) of each of the rotatable container carousels (410) may be rotated within a maximum radial reach of the robotic picking device (420) and wherein
   - the system (1) comprises at least two port columns (119) for each of the plurality of rotatable container carousels (410).
18. The automated storage and retrieval system (1) according to item 17, wherein the rail system (108) extends on at least two opposite sides of the product handling system (400), and wherein the at least one port column (119) is arranged at both sides.
19. A method of handling contents (80) within storage containers (400) stored in an automated storage and retrieval system (1) according to any one of items 15 to 18, wherein the method comprises the following steps:
   A) rotating the rotational device (410b-e) of the rotatable container carousel (410) to a rotational position where the storage container support (410a) is located vertically aligned below a target grid cell (122) of the rail system (108),
   B) moving a container handling vehicle (301) carrying a target storage container (106) with a target content (80) on the rail system (108) to the target grid cell (122) above the storage container support (410a),
   C) placing the target storage container (106) onto the storage container support (410a) by lowering the target storage container (106) through the grid cell (122) using the lifting device (304),
   D) if the target storage container (106) is outside a maximum radial extent (*R_{G,max}*) of the robotic picking device (420), rotating the rotational device (410b-e) such that the storage container support (410a) with the target storage container (106) is within the maximum radial extent (*R_{G,max}*) and
   E) picking the target content (80) from within the target storage container (106) by use of the gripper (420c),
   wherein the steps A)-E) are controlled by the control system (500).
20. The method according to item 19, wherein the product handling system (400) further comprises
   - a plurality of the rotatable container carousel (410) and
   - an access station (430) arranged at least partly above at least one of the rotatable container carousels (410), wherein the access station (430) comprises an access opening (430b) configured to allow an operator access to contents (80) within a storage container (106) supported on the storage container support (410a),
   wherein the method further comprises the following steps:
   F) placing the target content (80) into an accessed storage container (106) supported on the storage container support (410a) of one or more rotatable container carousels (410) arranged nearest the access station (430).

## Claims

1. A product handling system (400) for retrieving and storing products (80) within storage containers (106), wherein the product handling system (400) comprises
- a rotatable container carousel (410) comprising
- a rotational device (410b-e) having a rotational carousel axis (*C_{C}*) and
- a storage container support (410a) connected to the rotational device (410b-e) at a radial carousel distance (*R_{C}*) between the rotational axis (*C_{C}*) of the rotational device (410b-e) and a horizontal center point of the storage container support (410a), allowing rotation through at least a storage container loading position and a storage container accessing position, and
- a robotic picking device (420) comprising
a robotic base (420a) at a base center position,
a first robotic segment (420b) connected to the robotic base (420a) and
a gripper (420c) connected at least indirectly to the first robotic segment (420a), the gripper (420c) being at least within reach of the storage container accessing position,
wherein the gripper (420c) is configured to releasably grab a product (80) from within a storage container (106) positioned in the storage container accessing position.

2. The product handling system (400) in accordance with claim 1, wherein the gripper (420c) is spaced at an adjustable radial gripper distance (*R_{g}*) relative to the base center position.

3. The product handling system (400) in accordance with claim 1 or claim 2, wherein the first robotic segment (420b) is rotatably connected to the robotic base (420a) with a first rotational axis (*C_{RV}*)*.*

4. The product handling system (400) in accordance with claim 3, wherein the robotic picking device (420) further comprises
- a second robotic segment (420d) rotatably connected to the first robotic segment (420b), wherein a longitudinal orientation of the second robotic segment (420d) is adjustable relative to the first rotational axis (*C_{RV}*), and optionally wherein:
- the second robotic segment (420d) comprises
a first end rotatably connected to the first robotic segment (420b) and wherein the robotic picking device (420) further comprises
- a third robotic segment (420e) comprising
a first end rotatably connected to a second end of the second robotic segment (420d) and
a second end at least indirectly connected to the gripper (420c).

5. The product handling system (400) in accordance with any one of the preceding claims, wherein the rotatable container carousel (410) further comprises
- a carousel arm (410d) extending radially from a central portion of the rotational device (410b-e) and
- a carousel motor (410c) configured to rotate the carousel arm (410d) around the vertical rotational axis (*C_{C}*),
wherein the storage container support (410a) is arranged at an end of the carousel arm (410d) distal to the vertical rotational axis (*C_{C}*)*.*

6. The product handling system (400) in accordance with any one of the preceding claims, wherein the product handling system (400) further comprises
- an access station (430) arranged at least partly above the rotatable container carousel (410),
wherein the access station (430) is configured to allow an operator access to content (80) within a storage container (106) supported on the storage container support (410a).

7. The product handling system (400) in accordance with any preceding claims, wherein the product handling system (400) comprises
- a plurality of the rotatable container carousels (410) distributed around the robotic picking device (420) such that the storage container support (410a) of each of the rotatable container carousels (410) may be rotated within a maximum radial extent of the robotic picking device (420).

8. The product handling system (400) in accordance with claim 7, wherein each of the plurality of rotatable container carousels (410) comprises a plurality of the storage container support (410a) distributed around the rotational device (410b-e), and optionally: wherein each of the horizontal storage container supports (410a) is connected to the rotational device (410b-e) at the radial carousel distance (*R_{C}*).

9. The product handling system (400) in accordance with any one of the preceding claims, wherein the system (400) is configured such that a rotation of the storage container support (410a) around the rotational axis (*C_{C}*) follows a circular trajectory with radius equal to the radial carousel distance (*Rc*), and where the maximum radial gripper distance (*R_{G}*) is at least the distance from the base center position to the circular trajectory.

10. The product handling system (400) in accordance with any preceding claims,
wherein the product handling system (400) further comprises
- a camera system (450) comprising
- a camera (450a) configured to visually inspect contents (80) within a storage container (106) when the storage container support (410a) is oriented in, or approaching, a picking position and
- a camera transmitter configured to transmit information from the visual inspection of the contents (80) to a control system (500) with which the rotatable container carousel (410) and the robotic picking device (420) are configured to be in signal communication.

11. The product handling system (400) in accordance with any preceding claims,
wherein the product handling system (400) further comprises
- a rotatable camera system (450) comprising a camera base (450b) arranged above the rotatable container carousel (410) and a camera (450a) rotatably connected to the camera base (450b),
wherein the rotatable camera system (450) is configured such that the camera (450a) may visually inspect contents (80) within a storage container (106) when the storage container support (410a) is oriented in, or approaching, a picking position, and optionally:
wherein the rotatable camera system (450) further comprises
- a camera arm (450c) rotationally coupled at one longitudinal position to the camera base (450b),
wherein the camera (450a) is coupled to the camera arm (450c) at another longitudinal position.

12. An automated storage and retrieval system (1) comprising:
- a product handling system (400) in accordance with any one of claims 1-11;
- a rail system (108) comprising a first set of parallel rails (110) arranged in a horizontal plane (*P*) and extending in a first direction (*X*) and a second set of parallel rails (111) arranged in the horizontal plane (*P*) and extending in a second direction (*Y*) which is orthogonal to the first direction (*X*), which first and second sets of rails (110, 111) form a grid pattern in the horizontal plane (*P*) comprising a plurality of adjacent grid cells (122), each comprising a grid opening (115) defined by a pair of neighboring rails (110a, 110b) of the first set of rails (110) and a pair of neighboring rails (111a, 111b) of the second set of rails (111);
- a plurality of stacks (107) of storage containers (106) arranged in storage columns (105) located beneath a storage section of the rail system (108), wherein each storage column (105) is located vertically below a grid opening (115);
- at least one port column (119) located beneath a delivery section of the rail system (108) and vertically aligned with at least one possible storage container loading position of the storage container support (410a), the at least one port column (119) being void of storage containers (106); and
- a container handling vehicle (301) comprising a lifting device (304) for lifting storage containers (106) stacked in the stacks (107) above the storage section and drive means (301b,c) configured to drive the vehicle (301) along the rail system (108) in at least one of the first direction (*X*) and the second direction (Y).

13. The automated storage and retrieval system (1) according to claim 12, wherein the delivery section of the rail system (108) extends above at least a region of the product handling system (400).

14. The automated storage and retrieval system (1) according to claim 12 or 13, wherein the product handling system (400) comprises
- a plurality of the rotatable container carousels (410) distributed around the robotic picking device (420) such that the storage container support (410a) of each of the rotatable container carousels (410) may be rotated within a maximum radial reach of the robotic picking device (420) and wherein
- the system (1) comprises at least two port columns (119) for each of the plurality of rotatable container carousels (410), and optionally:
wherein the rail system (108) extends on at least two opposite sides of the product handling system (400), and wherein the at least one port column (119) is arranged at both sides.

15. A method of handling contents (80) within storage containers (400) stored in an automated storage and retrieval system (1) according to any one of claims 12 to 14, wherein the method comprises the following steps:
A) rotating the rotational device (410b-e) of the rotatable container carousel (410) to a rotational position where the storage container support (410a) is located vertically aligned below a target grid cell (122) of the rail system (108),
B) moving a container handling vehicle (301) carrying a target storage container (106) with a target content (80) on the rail system (108) to the target grid cell (122) above the storage container support (410a),
C) placing the target storage container (106) onto the storage container support (410a) by lowering the target storage container (106) through the grid cell (122) using the lifting device (304),
D) if the target storage container (106) is outside a maximum radial extent (*R_{G,max}*) of the robotic picking device (420), rotating the rotational device (410b-e) such that the storage container support (410a) with the target storage container (106) is within the maximum radial extent (*R_{G,max}*) and
E) picking the target content (80) from within the target storage container (106) by use of the gripper (420c),
wherein the steps A)-E) are controlled by a control system (500).
